# EUROPEAN PATENT APPLICATION

(11) **EP 4 510 232 A1**
(43) Date of publication of application: **19.02.2025**
(21) Application number: 23898396.9
(22) Date of filing: 01.12.2023
(51) Int. Cl.: H01M 4/58, H01M 4/62, H01M 4/136, H01M 10/052, H01M 4/02

(54) **CATHODE AND LITHIUM SECONDARY BATTERY MANUFACTURED USING SAME**

(30) Priority: 02.12.2022 KR 20220166703
(71) Applicant: LG Energy Solution, Ltd., Seoul 07335 (KR)
(72) Inventor: KIM, Kwang Jin, Daejeon 34122 (KR); KWON, O Jong, Daejeon 34122 (KR); CHOI, Jung Hun, Daejeon 34122 (KR); LEE, Da Young, Daejeon 34122 (KR); SUNG, Jin Su, Daejeon 34122 (KR); PARK, Jeong Hwa, Daejeon 34122 (KR); HAN, Geum Jae, Daejeon 34122 (KR); KIM, Ki Woong, Daejeon 34122 (KR); AN, In Gu, Daejeon 34122 (KR)
(74) Representative: Hoffmann Eitle
(86) International application number: PCT/KR2023/019714
(87) International publication number: WO 2024/117873

(57) **Abstract**

A positive electrode according to one embodiment of the present technology is a positive electrode including a positive electrode active material layer disposed on at least one surface of a positive electrode current collector, the positive electrode active material layer includes a lithium transition metal phosphate and a fluorine-based binder, and, in a flexibility evaluation, in which the positive electrode is lifted after bringing measuring rods for each phi (Φ) into contact with the positive electrode active material layer, a ratio value (= P/D) of a porosity (P) of the positive electrode active material layer calculated by the disclosed Equation 1 to a maximum phi value (D) of the measuring rod at which a crack occurs is greater than or equal to 10. Porosity (P) = {1-(measured density of positive electrode active material layer/true density of positive electrode active material)} × 100

## Description

### [Technical Field]

This application claims priority to Korean Patent Application No. 10-2022-0166703, filed on December 2, 2022, the disclosure of which is incorporated herein by reference.

The present disclosure relates to a positive electrode and a lithium secondary battery manufactured using the same, and more particularly, to a positive electrode having excellent flexibility and positive electrode adhesion so that the risk of a crack occurring in the positive electrode during a manufacturing process is reduced, and a lithium secondary battery having increased energy density.

### [Background Technology of the Invention]

As the technology development of and demand for electric vehicles and energy storage systems (ESSs) increase, the demand for batteries as an energy source is rapidly increasing, and accordingly, various studies on batteries capable of meeting various needs have been conducted. In particular, studies have been actively conducted on a lithium secondary battery having high energy density and excellent lifespan and cycle characteristics as a power source for such devices.

As a positive electrode active material of the lithium secondary battery, lithium cobalt oxide (LCO), lithium nickel cobalt manganese oxide (LNCMO), lithium transition metal phosphates, and the like have been used.

The lithium transition metal phosphate is inexpensive because it is abundant in resources and includes an inexpensive material. In addition, since the lithium transition metal phosphate has low toxicity, environmental pollution can be reduced when the lithium transition metal phosphate is used. Further, since the lithium transition metal phosphate has an olivine structure, an active material structure can be stably maintained at a high temperature as compared to lithium transition metal oxides having a layered structure. Accordingly, the lithium transition metal phosphate has the advantage in that the battery exhibits excellent high-temperature stability and high-temperature lifespan characteristics.

However, since the lithium transition metal phosphate has poor lithium mobility and low electrical conductivity as compared to the lithium transition metal oxides such as lithium cobalt oxide (LCO) and lithium nickel cobalt manganese oxide (LNCMO), lithium transition metal phosphate with a small average particle diameter is mainly used as a positive electrode active material. However, when the size of lithium transition metal phosphate particles is reduced, the specific surface area increases, and accordingly, particle agglomeration severely occurs. As a result, the lithium transition metal phosphate and a binder are not effectively mixed, and thus, positive electrode adhesion is reduced. Thus, when manufacturing the electrode or during charging and discharging, deintercalation of a positive electrode active material layer occurs, thereby increasing battery resistance and reducing the capacity of the secondary battery.

In addition, as compared to a positive electrode including lithium cobalt oxide (LCO) or lithium nickel cobalt manganese oxide (LNCMO) as a positive electrode active material, a positive electrode including a lithium transition metal phosphate as a positive electrode active material has a low rolling density, and when the rolling density is increased, flexibility is reduced, and thus it is difficult to increase the rolling density due to the deintercalation of the positive electrode active material layer during rolling and slitting processes. Accordingly, it is difficult to increase the energy density of the battery, and particularly, when manufactured as a wound electrode assembly, there is a high risk of cracking in the positive electrode due to low flexibility.

In order to improve the flexibility of the lithium transition metal phosphate-based positive electrode, a technique of selecting a polymer binder having a high molecular weight has been studied, but the binder having a high molecular weight can rapidly increase the viscosity of a positive electrode slurry after mixing the slurry, which causes a decrease in coating productivity of the slurry. However, when a solid content in the slurry is lowered to lower the viscosity of the positive electrode slurry, there is a problem that drying is time-consuming due to an increase in solvent.

Accordingly, it is necessary to develop a technology that improves the flexibility and adhesion of the positive electrode without causing a decrease in the coating and drying productivity of the positive electrode.

### [Description of the Invention]

### [Technical Problem]

The present disclosure is directed to providing a positive electrode having improved flexibility and adhesion without causing a decrease in coating and drying productivity of the positive electrode, and a lithium secondary battery having improved energy density.

### [Technical Solution]

The present disclosure provides a positive electrode including a positive electrode active material layer disposed on at least one surface of a positive electrode current collector. The positive electrode active material layer includes a lithium transition metal phosphate and a fluorine-based binder, and, in a flexibility evaluation, in which the positive electrode is lifted after bringing measuring rods for each phi (Φ) into contact with the positive electrode active material layer, a ratio value (= P/D) of a porosity (P) of the positive electrode active material layer calculated by Equation 1 below to a maximum phi value (D) of the measuring rod at which a crack occurs is greater than or equal to 10. Porosity (P) = {1-(measured density of positive electrode active material layer/true density of positive electrode active material)} × 100.

In the positive electrode according to some embodiments, the P/D value may range from 12.5 to 36.

In the positive electrode according to some embodiments, the porosity (P) of the positive electrode active material layer, as calculated by Equation 1, may be greater than or equal to 27%.

In the positive electrode according to some embodiments, the porosity (P) of the positive electrode active material layer, as calculated by Equation 1, may range from 28% to 36%.

In the positive electrode according to some embodiments, the fluorine-based binder may include a first fluorine-based binder having a weight-average molecular weight (Mw) of 500,000 g/mol to 750,000 g/mol and a second fluorine-based binder having a weight-average molecular weight (Mw) of 800,000 g/mol or more.

In the positive electrode according to some embodiments, the second fluorine-based binder may have a weight-average molecular weight (Mw) of 850,000 g/mol to 2,000,000 g/mol.

In the positive electrode according to some embodiments, a ratio value (=B/A) of a weight (B) of the lithium transition metal phosphate to a total weight (A) of the fluorine-based binder may range from 27 to 98.

In the positive electrode according to some embodiments, a ratio value (=B/A) of a weight (B) of the lithium transition metal phosphate to a total weight (A) of the fluorine-based binder may range from 30 to 65.

In the positive electrode according to one embodiment, in the flexibility evaluation, in which the positive electrode is lifted after bringing measuring rods for each phi (Φ) into contact with the positive electrode active material layer, a crack may occur at a measuring rod of 3 phi (Φ) or less.

In the positive electrode according to some embodiments, the lithium transition metal phosphate may be represented by Chemical Formula 1 below,

[Chemical Formula 1] Li₁₊ₐM1₁₋ₓM2ₓ(PO_{y-b})D_{b}

wherein in Chemical Formula 1,
M1 may be at least one element selected from the group consisting of Fe, Mn, Co, Ni, Cu, Zn, and Mg,
M2 may be selected from Groups 2 to 15 and may be one or more elements excluding element M1,
D may be at least one element selected from the group consisting of F, S, and N, and
a, x, y, and b may satisfy -0.5≤a≤0.5, 0≤x≤0.8, 3.95≤y≤4.05, and 0≤b≤1, respectively.

In the positive electrode according to some embodiments, a loading amount of the positive electrode active material layer may be in a range of 400 mg/25 cm² to 700 mg/25 cm²,

In the positive electrode according to some embodiments, the positive electrode active material layer may further include a conductive material, and the conductive material may be a carbon nanotube.

In the positive electrode according to some embodiments, the conductive material may be included in the positive electrode active material layer in an amount of 0.5 wt% to 1.3 wt%.

In the positive electrode according to some embodiments, the positive electrode active material layer may further include hydrogenated nitrile-based butadiene rubber.

According to some aspects of the present disclosure, there is provided a lithium secondary battery including the above-described positive electrode.

### [Advantageous Effects]

A positive electrode according to the present disclosure has improved flexibility and thus can reduce the risk of cracking during bending.

In addition, a positive electrode according to the present disclosure has improved adhesion and thus can increase a weight ratio of a lithium transition metal phosphate included in a positive electrode active material layer without reducing adhesion, thereby improving energy density.

### [Best Mode for Carrying Out the invention]

Advantages and features of the present invention and methods for achieving the same will be apparent by the exemplary embodiments described below in detail with reference to the accompanying drawings. However, the present invention is not limited to the exemplary embodiments described below and may be implemented in various different forms. Rather, the embodiments have been provided to make the disclosure of the present invention thorough and complete and to fully inform the scope of the present invention to those of ordinary skill in the art to which the present invention pertains, and the present invention is defined only by the scope of the claims. Throughout the specification, like reference numerals denote like elements.

All terms used herein (including technical or scientific terms) should be interpreted as having the same meaning as commonly understood by one of ordinary skill in the art to which the present invention pertains unless otherwise defined. In addition, terms such as those defined in the commonly used dictionaries are not to be interpreted in an ideal or overly formal sense unless explicitly defined.

Terms used herein are for describing the embodiments and are not intended to limit the present invention. In the present specification, the singular form may include the plural form unless specifically stated in the phrase. As used herein, the term "comprises" and/or "comprising" do/does not preclude the presence or addition of one or more other components in addition to the stated components.

In the present specification, when a component is referred to as "containing," "including," "comprising," or "having" another component, it is to be understood that the component does not exclude other components but may include other components as well, unless specifically stated otherwise.

In the present specification, reference to "A and/or B" refers to A, B, or A and B.

In the present specification, "%" refers to wt% unless clearly described otherwise.

In the present specification, D₅₀ refers to a particle diameter corresponding to a cumulative volume of 50% in the particle diameter distribution curve. The D₅₀ may be measured, for example, by a laser diffraction method. The laser diffraction method generally enables measurement of a particle diameter ranging from submicrons to several mm and may obtain a result with high reproducibility and high resolution.

In the present specification, "phi (Φ)" refers to a diameter of a specific measuring rod, in units of millimeters (mm).

In the present specification, a "specific surface area" is measured by a Brunauer-Emmet-Teller (BET) method and may be specifically calculated from the amount of nitrogen gas adsorbed at a liquid nitrogen temperature (77K) using BELSORP-mini II commercially available from BEL Japan.

In the present specification, a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

### < Measurement Conditions >

Measurement instrument: Agilent GPC (Agilent 1200 series, USA)
Column: connected two PL Mixed B
Column temperature: 40 °C
Eluent: tetrahydrofuran
Flow rate: 1.0 mL/min
Concentration: ~1 mg/mL (100 µL injection)

In the present specification, positive electrode flexibility may be measured as follows. Measuring rods are manufactured for each phi (Ø) and a positive electrode having a loading amount of 600 mg/25 cm² is cut into a width of 10 cm and a length of 30 cm. The cut positive electrode is bent in half and the measuring rod is brought into contact therewith, and then both ends of the positive electrode are lifted at a speed of 10 mm per minute. At this time, both ends of the positive electrode are lifted until a force measured by a universal testing machine (UTM) reaches 5N. Whether a crack occurred in the electrode is observed for each phi through an optical microscope, and when there is no crack, measurement is performed with a measuring rod having a smaller phi. In addition, diameters of the measuring rods are 1 Φ, 1.5 Φ, 2 Φ, 2.5 Φ, 3 Φ, 4 Φ, 5 Φ, 6 Φ, and 7 Φ, respectively.

In the present specification, a porosity of a positive electrode active material layer may be defined by Equation 1 below, and in Equation 1 below, a "measured density of the positive electrode active material layer" is a value calculated by measuring the weight and volume of the positive electrode active material layer separated from a positive electrode current collector of a rolled positive electrode, the "true density of the positive electrode active material" is the density relative to the volume of the positive electrode active material particles themselves, excluding pores, and can be measured using a Pycnometer (AccuPycII 1340). Porosity (P)= {1-(measured density of positive electrode active material layer/true density of positive electrode active material)} × 100.

Hereinafter, the present invention will be described in detail.

### Positive electrode

A positive electrode according to some embodiments of the present disclosure is a positive electrode including a positive electrode active material layer disposed on at least one surface of a positive electrode current collector, wherein the positive electrode active material layer includes a lithium transition metal phosphate and a fluorine-based binder, and in a flexibility evaluation, in which the positive electrode is lifted after bringing measuring rods for each phi (Φ) into contact with the positive electrode active material layer, a ratio value (= P/D) of a porosity P of the positive electrode active material layer calculated by Equation 1 below to a maximum phi value D of the measuring rod at which a crack occurs may be greater than or equal to 10. Porosity (P)= {1-(measured density of positive electrode active material layer/true density of positive electrode active material)} × 100.

Since the flexibility evaluation method has been described above, repeated descriptions will be omitted here.

Since the lithium transition metal phosphate used as the positive electrode active material is a fine particle compared to lithium nickel cobalt manganese oxide, a positive electrode slurry including the lithium transition metal phosphate has a significantly higher viscosity than a positive electrode slurry including lithium nickel cobalt manganese oxide. Thus, conventionally, when preparing a positive electrode slurry including a lithium transition metal phosphate as a positive electrode active material, it has been common to select a fluorine-based binder having a weight-average molecular weight (Mw) of 750,000 g/mol or less as a binder in consideration of manufacturing processability.

Meanwhile, compared to a positive electrode including lithium cobalt oxide (LCO) or lithium nickel cobalt manganese oxide (LNCMO) as a positive electrode active material, a positive electrode including a lithium transition metal phosphate as a positive electrode active material has a low rolling density, and when the rolling density is increased, flexibility is reduced, and thus there is a risk of a crack occurring in the positive electrode when manufactured in a jelly-roll type.

The inventors of the present technology have found that controlling the P/D value to an appropriate value, such as greater than 10, leads to an improvement in flexibility and adhesion of the positive electrode. In some exemplary embodiments the P/D value may be adjusted to within a range of 12.5 to 36. As the P/D value increases, better flexibility of the positive electrode is obtained, but, when the value is too large, the energy density of the positive electrode is too low, which is not preferable. Conversely, when the P/D value decreases and the positive electrode receives a physical external force such as bending deformation, as a crack occurs in the positive electrode, capacity and adhesive strength may decrease. Accordingly, control of P/D value allows for balancing of energy characteristics with physical durability and for production of a positive electrode which has both advantageous energy density and flexibility.

The positive electrode according to some embodiments of the present disclosure may include a positive electrode active material layer. Specifically, the positive electrode according to the present disclosure may include a positive electrode current collector and the positive electrode active material layer disposed on at least one surface of the positive electrode current collector.

The positive electrode current collector is not particularly limited as long as it does not cause a chemical change in the battery and has conductivity. For example, stainless steel, aluminum, nickel, titanium, sintered carbon, or aluminum or stainless steel whose surface has been treated with carbon, nickel, titanium, silver, or the like may be used as the current collector.

The positive electrode current collector may have a thickness of 3 µm to 500 µm and may have fine irregularities formed on a surface thereof to increase adhesion to the positive electrode active material layer. For example, the positive electrode current collector may be used in various forms such as a film, a sheet, a foil, a net, a porous body, a foamed body, a non-woven fabric, and the like.

In the positive electrode according to the present disclosure, the porosity P of the positive electrode active material layer, calculated by Equation 1 described above, may be 27% or more, and preferably, 28% to 36% in order to improve flexibility. When the porosity P of the positive electrode active material layer is less than 27%, the flexibility of the positive electrode is reduced, and thus, a crack may occur in the positive electrode during a manufacturing process of the jelly-roll type electrode assembly, and when the porosity P of the positive electrode active material layer is greater than 36%, the energy density of the positive electrode may be reduced, which is not preferable.

During the manufacturing process of the positive electrode, by appropriately adjusting a thickness change rate of the positive electrode active material layer before/after rolling in a rolling process and a loading amount of the positive electrode active material layer, the positive electrode active material layer may have a porosity in the above numerical range. Specifically, the porosity of the positive electrode active material layer may decrease as the thickness change rate before/after rolling or the loading amount of the positive electrode active material layer increases, and the porosity of the positive electrode active material layer may increase as the thickness change rate before/after rolling or the loading amount of the positive electrode active material layer decreases.

In some embodiments, the loading amount of the positive electrode active material layer may range from 400 mg/25 cm² to 750 mg/25 cm², and preferably from 450 mg/25 cm² to 700 mg/25 cm². A loading amount in the above range is larger than a loading amount of a general positive electrode, and thus is suitable as a high loading positive electrode.

When performing a flexibility test in which the positive electrode is lifted after bringing the measuring rods for each phi into contact with the positive electrode active material layer, the positive electrode according to the present disclosure may have flexibility in which a crack is generated with a measuring rod of 3 phi (Φ) or less, and is not generated with a measuring rod of greater than 3 phi (Φ).

The positive electrode according to the present disclosure has a P/D value greater than or equal to 10, and thus, has both appropriate energy density as well as excellent flexibility, so that the rate of cracking during bending deformation of the positive electrode is reduced, thereby preventing deintercalation of the positive electrode in the manufacturing process of the positive electrode.

The positive electrode according to the present disclosure has an adhesive strength between the positive electrode current collector and the positive electrode active material layer of 17 gf/20 mm or more, and specifically 20 gf/20 mm or more, more specifically 20 gf/20 mm to 100 gf/20 mm, as measured by a 90° peel test.

The positive electrode according to the present disclosure has excellent positive electrode adhesion and flexibility, and as a result, a high-loading positive electrode can be manufactured and the deintercalation of the positive electrode can be prevented, and thus the cell resistance of a secondary battery can be lowered, the capacity and output characteristics of the battery can be enhanced, and defects that are generated in the manufacturing process can be reduced.

Hereinafter, each component included in the positive electrode active material layer will be described in detail.

### (1) Positive electrode active material

The present disclosure includes a lithium transition metal phosphate as a positive electrode active material. The lithium transition metal phosphate has an olivine structure, and thus an active material structure remains stable at a high temperature as compared to lithium transition metal oxides having a layered structure. As a result, when the lithium transition metal phosphate is used as a positive electrode active material, high-temperature stability and high-temperature lifespan characteristics of the positive electrode are remarkably improved, so that the risk of ignition of a lithium secondary battery including the positive electrode may be reduced.

The lithium transition metal phosphate may be a compound represented by Chemical Formula 1 below.

[Chemical Formula 1] Li₁₊ₐM1₁₋ₓM2ₓ(PO_{y-b})D_{b}

wherein in Chemical Formula 1,
M1 may be at least one element selected from the group consisting of Fe, Mn, Co, Ni, Cu, Zn, and Mg,
M2 may be selected from Groups 2 to 15 and may be one or more elements excluding element M1,
D may be at least one element selected from the group consisting of F, S, and N, and
a, x, y, and b may satisfy -0.5≤a≤0.5, 0≤x≤0.8, 3.95≤y≤4.05, and 0≤b≤1, respectively.

In the lithium transition metal phosphate according to some embodiments of the present disclosure, M1 may be Fe, and M2 may be one or more selected from the group consisting of Al, Mg, Co, Mn, Ti, Ga, Cu, V, Nb, Zr, Ce, In, Zn, and Y. Specifically, the lithium transition metal phosphate may be lithium iron phosphate (LiFePO₄).

The lithium transition metal phosphate may be a secondary particle in which primary particles are agglomerated with each other, and preferably, may have a monolithic structure composed of primary particles.

In the present specification, a "monolithic structure" means a structure present morphologically in an independent phase in which particles are not agglomerated with each other. A particle structure contrasting with the monolith structure may include a structure forming a relatively large-sized particle shape (secondary particles) through physical and/or chemical agglomeration of relatively small-sized particles (primary particles).

When the lithium transition metal phosphate has a monolithic structure composed of primary particles, lithium transition metal phosphate particles are less likely to break during the rolling process as compared to the case in which the lithium transition metal phosphate has a particle structure forming a secondary particle, which is preferable as the capacity reduction due to deintercalation of broken particles is small. In addition, when the lithium transition metal phosphate has primary particles of a monolithic structure, migration of the binder can be alleviated during a drying process of the positive electrode slurry, which is preferable in terms of interfacial adhesion between the positive electrode current collector and the positive electrode active material layer.

The lithium transition metal phosphate may include a carbon coating layer on a surface thereof. When the carbon coating layer is formed on the surface of the lithium transition metal phosphate, electrical conductivity can be improved to improve the resistance characteristics of the positive electrode.

The carbon coating layer may be formed using one or more raw materials selected from the group consisting of glucose, sucrose, lactose, starch, an oligosaccharide, a polyoligosaccharide, fructose, cellulose, a furfuryl alcohol polymer, a block copolymer of ethylene and ethylene oxide, a vinyl-based resin, a cellulose-based resin, a phenol-based resin, a pitch-based resin, and a tar-based resin. Specifically, the carbon coating layer may be formed through a process of mixing the raw materials with the lithium transition metal phosphate and performing heat treatment.

The lithium transition metal phosphate may have an average particle diameter D₅₀ of 0.8 µm to 20.0 µm, specifically 0.9 µm to 10.0 µm, and more specifically 0.9 µm to 3.0 µm. When the average particle diameter D₅₀ of the positive electrode active material satisfies the above range, the mobility of lithium in the lithium transition metal phosphate is improved so that charging and discharging characteristics of a battery can be improved.

The lithium transition metal phosphate may have a BET specific surface area of 5 m²/g to 20 m²/g, specifically 7 m²/g to 18 m²/g, and more specifically 9 m²/g to 16 m²/g. The above range corresponds to lower values compared to a conventional lithium transition metal phosphate. When the above range is satisfied, agglomeration of the lithium transition metal phosphate may be effectively suppressed even in a positive electrode slurry composition having a relatively small dispersant content.

The lithium transition metal phosphate may be included in an amount of 93 wt% to 99 wt%, specifically 94 wt% to 98 wt%, and more specifically 95 wt% to 98 wt% based on the total solid content of the positive electrode slurry composition. When the content of the lithium transition metal phosphate satisfies the above range, the battery capacity of the positive electrode can be improved by ensuring sufficient positive electrode energy density.

### (2) Binder

The positive electrode according to the present disclosure may include a fluorine-based binder as a binder, may preferably include two types of fluorine-based binders having different weight-average molecular weights.

Specifically, the positive electrode may include a first fluorine-based binder having a weight-average molecular weight (Mw) of 500,000 to 750,000 g/mol, and a second fluorine-based binder having a weight-average molecular weight (Mw) of 800,000 g/mol or more.

The first and second fluorine-based binders may each independently include a polyvinylidene fluoride (PVdF)-based polymer including vinylidene fluoride (VdF) as a monomer. Specific examples of the PVdF-based polymer may include a PVdF homopolymer, poly(vinylidene fluoride-co-hexafluoropropylene) (PVdF-HFP), poly(vinylidene fluoride-co-chlorotrifluoroethylene) (PVdF-CTFE), poly(vinylidene fluoride-co-tetrafluoroethylene) (PVdF-TFE), poly(vinylidene fluoride-co-trifluoroethylene) (PVdF-TrFE), and the like.

The first fluorine-based binder may have a weight-average molecular weight (Mw) of 500,000 g/mol to 750,000 g/mol, preferably 530,000 g/mol to 730,000 g/mol, and more preferably 550,000 g/mol to 650,000 g/mol. The first fluorine-based binder may serve to provide stability to the positive electrode slurry, and to provide adhesion between the positive electrode active material and the conductive material and between the current collector and the positive electrode active material layer.

In one exemplary embodiment, the first fluorine-based binder may be a homopolymer of polyvinylidene fluoride (PVdF). Since the homopolymer of PVdF includes few polar functional groups such as -COOH, the functional group of the binder can reduce the number of hydrogen bonds between hydrogen on the carbon coating layer coated on the surface of the lithium transition metal phosphate particles, so that gelation of the positive electrode slurry is prevented, and the coating processability of the positive electrode slurry is improved. In addition, the thickness and/or surface of the coated positive electrode active material layer are uniform, so that the output performance and lifespan characteristics of the lithium secondary battery manufactured using the positive electrode are excellent.

The second fluorine-based binder may have a weight-average molecular weight (Mw) of 800,000 g/mol or more, preferably 850,000 g/mol to 2,000,000 g/mol, and more preferably 900,000 g/mol to 1,500,000 g/mol. The second fluorine-based binder may improve the flexibility and adhesion of the positive electrode.

The second fluorine-based binder may be a homopolymer or a copolymer of polyvinylidene fluoride (PVdF), and in some embodiments of the present disclosure, the second fluorine-based binder may be polyvinylidene fluoride (PVdF) including polar functional groups. When the second fluorine-based binder includes polar functional groups, the crystallinity of the second fluorine-based binder is lowered, thereby improving the flexibility of the positive electrode active material layer. In addition, due to the improved flexibility of the positive electrode active material layer, even when external stress is applied, the positive electrode active material layer is not deintercalated from the positive electrode current collector, as a result, the adhesion of the positive electrode may be improved.

The polar functional groups may be one or more selected from the group consisting of a carboxylic acid group, a sulfonic acid group, a phosphonic acid group, an acid anhydride group, a hydroxyl group, and a salt thereof, but are not necessarily limited thereto, and may be any polar functional groups that can be used in the art.

When a medium/low molecular weight first fluorine-based binder having a weight-average molecular weight (Mw) in a range of 500,000 g/mol to 750,000 g/mol and a high molecular weight second fluorine-based binder having a weight-average molecular weight (Mw) of 800,000 g/mol or more are used together, the flexibility of the positive electrode can be improved in relation to the related art in which only a medium/low molecular weight fluorine-based binder is selected as a binder. In one exemplary embodiment, a weight ratio of the first fluorine-based binder and the second fluorine-based binder may be 65:35 to 1:4, preferably 1: 1 to 1:4, and more preferably 1: 1 to 1:3. When the weight ratio of the first fluorine-based binder and the second fluorine-based binder exceeds 65:35 and the content of the first fluorine-based binder is excessively large, it is not preferable in terms of the flexibility of the positive electrode, and when the weight ratio of the first fluorine-based binder and the second fluorine-based binder is less than 1:4 and the content of the second fluorine-based binder is excessively large, gelation of the positive electrode slurry may occur, and thus it is not preferable.

The first fluorine-based binder and the second fluorine-based binder may be included in the positive electrode active material layer such that a combined weight of the first fluorine-based binder and the second fluorine-based binder ranges from 1.0 wt% to 4.0 wt%, preferably from 1.2 wt% to 3.5 wt%, and more preferably from 1.4 wt% to 3.0 wt%.

Further, a ratio of a weight B of the lithium transition metal phosphate, which is a positive electrode active material, to a combined weight A of the first fluorine-based binder and the second fluorine-based binder may range from 27 to 98, preferably from 30 to 65, and more preferably from 32 to 48.5. Since the positive electrode of the present disclosure includes fluorine-based binders having different weight-average molecular weight ranges, the adhesion of the positive electrode can be improved, which can increase the weight ratio of the positive electrode active material included in the positive electrode active material layer, thereby increasing the energy density per weight of the positive electrode.

### (3) Conductive material

The positive electrode active material layer of the present disclosure may further include a conductive material.

The conductive material is not particularly limited as long as it imparts conductivity without causing chemical changes in the battery, and may be, for example: graphite; carbon-based materials such as carbon black, acetylene black, Ketjen black, channel black, furnace black, lamp black, or thermal black; a conductive fiber such as a carbon fiber or a metal fiber; fluorocarbon; metal powder such as aluminum powder, or nickel powder; a conductive whisker such as zinc oxide or potassium titanate; a conductive metal oxide such as titanium oxide; a conductive material such as a polyphenylene derivative, or the like. Specific examples of a commercially available conductive material may include acetylene black-based products (available from Chevron Chemical Company, Denka Singapore Private Limited (Denka Black), and Gulf Oil Company), Ketjen black, the EC series (available from Armak Company), Vulcan XC-72 (available from Cabot Company), Super P (available from Timcal Co., Ltd.), and the like. Preferably, the conductive material may be carbon nanotubes. When the conductive material is carbon nanotubes, an excellent conductive network of the carbon nanotubes may suppress a binder migration phenomenon in which the binder moves to the electrode surface when the electrode is dried, thereby further improving interfacial adhesion between the positive electrode current collector and the positive electrode active material layer.

The conductive material may be included in the positive electrode active material layer in an amount of 0.3 wt% to 2.0 wt%, specifically 0.4 wt% to 1.5 wt%, and more specifically 0.5 wt% to 1.3 wt%. When the content of the conductive material in the positive electrode active material layer satisfies the above range, the conductive network of the positive electrode is ensured, so that the electrical conductivity of the positive electrode may be improved.

According to some embodiments of the present disclosure, the positive electrode active material layer may include 94.9 to 97.2 wt% of the positive electrode active material, 0.8 to 1.3 wt% of the conductive material, and 2.0 to 3.5 wt% of the binder. When the composition in the positive electrode active material layer satisfies the above range, the adhesion and conductivity of the electrode are ensured, while the active material content is increased, so that the capacity and resistance performance of the lithium secondary battery including the positive electrode are balanced.

### (4) Dispersant

The positive electrode active material layer of the present disclosure may further include a dispersant.

The dispersant suppresses the phenomenon in which the lithium transition metal phosphate is excessively agglomerated in the positive electrode slurry composition, and allows the lithium transition metal phosphate to be effectively dispersed and present in the prepared positive electrode active material layer.

The dispersant may include a hydrogenated nitrile-based copolymer, and specifically, the dispersant may be a hydrogenated nitrile-based copolymer.

Specifically, the hydrogenated nitrile-based copolymer may be a copolymer including a structural unit derived from α,β-unsaturated nitrile and a structural unit derived from a hydrogenated conjugated diene, or a copolymer including a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, and the like may be used, which may be used alone or in a mixture of two or more thereof. As the conjugated diene-based monomer, for example, a C4 to C6 conjugated diene-based monomer such as 1,3-butadiene, isoprene, 2,3-methyl butadiene, and the like may be used, which may be used alone or in a mixture of two or more thereof.

More specifically, the hydrogenated nitrile-based copolymer may be hydrogenated nitrile-based butadiene rubber (H-NBR).

The dispersant may be included in an amount of 0.1 wt% to 2.0 wt%, specifically 0.2 wt% to 1.8 wt%, and more specifically 0.3 wt% to 1.6 wt% based on the total solid content of the positive electrode slurry composition. When the content of the dispersant satisfies the above range, agglomeration of the positive electrode active material may be suppressed, thereby preventing gelation of the positive electrode slurry composition.

The positive electrode according to the present disclosure may be manufactured according to a typical method of manufacturing a positive electrode. Specifically, the positive electrode may be manufactured by preparing a positive electrode slurry composition including the positive electrode active material, the conductive material, the binder, and/or the dispersant, applying the positive electrode slurry composition onto a positive electrode current collector, followed by drying and rolling.

Further, as another method, the positive electrode may be manufactured by casting the positive electrode slurry composition on a separate support and then laminating a film peeled from the support on the positive electrode current collector.

### Lithium secondary battery

Next, a lithium secondary battery according to the present disclosure will be described.

A lithium secondary battery according to some embodiments of the present disclosure may include a positive electrode, a negative electrode, a separator interposed between the positive electrode and the negative electrode, and an electrolyte.

In the lithium secondary battery, the positive electrode is the same as described above. For example, the positive electrode includes a positive electrode active material layer disposed on at least one surface of a positive electrode current collector, wherein the positive electrode active material layer includes a lithium transition metal phosphate and a fluorine-based binder, and in a flexibility evaluation, in which the positive electrode is lifted after bringing measuring rods for each phi (Φ) into contact with the positive electrode active material layer, a ratio value (= P/D) of a porosity P of the positive electrode active material layer calculated by Equation 1 below to a maximum phi value D of the measuring rod at which a crack occurs may be greater than or equal to 10. Porosity (P)= {1-(measured density of positive electrode active material layer/true density of positive electrode active material)} × 100.

Additionally, the positive electrode may further include a conductive material and a dispersant.

The negative electrode may be manufactured, for example, by preparing a composition for forming a negative electrode, which includes a negative electrode active material, a negative electrode binder, and a negative electrode conductive material, on a negative electrode current collector, and then applying the composition onto the negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; metallic compounds capable of alloying with lithium, such as Si, Al, Sn, Pb, Zn, Bi, In, Mg, Ga, Cd, a Si alloy, a Sn alloy, an Al alloy, and the like; or composites including metallic compounds and carbonaceous materials. In addition, examples of low-crystallinity carbon include soft carbon and hard carbon, and examples of high-crystallinity carbon include natural graphite, Kish graphite, pyrolytic carbon, mesophase pitch-based carbon fiber, meso-carbon microbeads, mesophase pitches, and high-temperature sintered carbon such as petroleum or coal tar pitch-derived cokes, which may be used alone or in a mixture of two or more thereof. In addition, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples of the negative electrode conductive material include graphite such as natural graphite, artificial graphite, and the like; carbon-based materials such as carbon black, acetylene black, Ketjen black, channel black, furnace black, lamp black, thermal black, carbon fiber, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in a mixture of two or more thereof. The negative electrode conductive material may be typically included in an amount of 1 to 30 wt %, specifically 1 to 20 wt %, and more specifically 1 to 10 wt % with respect to the total weight of a negative electrode active material layer.

The negative electrode binder serves to enhance cohesion between negative electrode active material particles and adhesion between the negative electrode active material and the negative electrode current collector. Specific examples of the negative electrode binder include polyvinylidene fluoride (PVdF), a vinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in a mixture of two or more thereof. The negative electrode binder may be included in an amount of 1 wt % to 30 wt %, specifically 1 wt % to 20 wt %, and more specifically 1 wt % to 10 wt % with respect to the total weight of the negative electrode active material layer.

Meanwhile, the negative electrode current collector is not particularly limited as long as it does not cause a chemical change in a battery and has high conductivity. For example, copper, stainless steel, aluminum, nickel, titanium, sintered carbon, or copper or stainless steel whose surface has been treated with carbon, nickel, titanium, silver, or the like, an aluminum-cadmium alloy, or the like may be used as the negative electrode current collector.

In addition, the negative electrode current collector may have a thickness of 3 to 500 µm, and like the positive electrode current collector, fine irregularities may be formed on a surface of the negative electrode current collector to increase the binding force of the negative electrode active material. For example, the negative electrode current collector may be used in various forms including a film, a sheet, a foil, a net, a porous body, a foamed body, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a typical porous non-woven fabric, for example, a non-woven fabric formed of a high melting point glass fiber or a polyethylene terephthalate fiber may be used. In addition, the separator may be a porous thin film having a pore diameter of 0.01 µm to 10 µm and a thickness of 5 µm to 300 µm.

Meanwhile, in the lithium secondary battery, the electrolyte may include an organic solvent and a lithium salt, which are typically used in an electrolyte, but is not particularly limited.

As the organic solvent, any solvent that may serve as a medium through which ions involved in an electrochemical reaction of a battery can migrate may be used without particular limitation. Specifically, as the organic solvent, an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like may be used.

Among these, a carbonate-based solvent is preferably used, and a mixture of a cyclic carbonate having high ionic conductivity and a high dielectric constant, such as ethylene carbonate or propylene carbonate, which can increase the charge and discharge performance of the battery, and a linear carbonate-based compound with low viscosity (for example, ethyl methyl carbonate, dimethyl carbonate, diethyl carbonate, or the like) is more preferably used.

The lithium salt is not particularly limited as long as it is a compound capable of providing lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. The lithium salt is preferably included at a concentration of about 0.6 mol % to 2 mol % in the electrolyte.

**In** addition to the above-described electrolyte components, the electrolyte may further include one or more additives such as pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, or the like for the purpose of enhancing the lifetime characteristics of a battery, suppressing a decrease in battery capacity, enhancing the discharge capacity of a battery, or the like. In this case, the additives may be included in an amount of 0.1 to 5 wt % with respect to the total weight of the electrolyte.

The lithium secondary battery according to the present disclosure may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

**In** the manufacture of the lithium secondary battery according to the present disclosure, the electrode assembly may be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate, which are used in the manufacture of the positive electrode. When an electrolyte having the same components as the organic solvent used in the manufacture of the positive electrode is used as the electrolyte, the process of drying the electrode assembly may be omitted.

Unlike the above-described lithium secondary battery, a lithium secondary battery according to another embodiment of the present disclosure may be an all-solid-state battery.

As the battery case, any battery case that is typically used in the art may be used, and there is no limitation on an outer shape according to the purpose of the battery. For example, the outer shape of the battery case may be a cylindrical shape using a can, a prismatic shape, a pouch shape, a coin shape, or the like.

The lithium secondary battery according to the present disclosure is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and an excellent capacity retention rate.

Hereinafter, the present invention will be described in more detail with reference to examples. However, the following examples are merely presented to exemplify the present invention, and the scope of the present invention is not limited to the following examples.

### Example 1: Manufacture of positive electrode

### (1) Preparation of positive electrode slurry

LiFePO₄, which is a primary particle of a monolithic structure having an average particle diameter D₅₀ of 1.0 µm, as a lithium transition metal phosphate, carbon nanotubes (CNTs) as a conductive material, polyvinylidene fluoride (PVdF), which has a weight-average molecular weight (Mw) of 630,000 g/mol and is a homopolymer, as a first fluorine-based binder, and polyvinylidene fluoride (PVdF), which has a weight-average molecular weight (Mw) of 1,000,000 g/mol, as a second fluorine-based binder were added to an N-methylpyrrolidone (NMP) solvent. Mixing was performed at 2500 rpm for 90 minutes using a homo-disperser to prepare a positive electrode slurry.

In the positive electrode slurry, the lithium transition metal phosphate, the conductive material, the first fluorine-based binder, and the second fluorine-based binder were present in a weight ratio of 96.6:1.0:1.25:1.25, and a solid content of the positive electrode slurry was 62 wt%.

### (2) Manufacture of positive electrode

The positive electrode slurry was applied onto a 20 µm-thick aluminum thin film to be 600 mg/25 cm² and then hot air-dried at 130 °C for 5 minutes so that the positive electrode slurry had a solid content of 99.0 wt% or more. Thereafter, the dried positive electrode slurry was rolled so that a positive electrode active material layer had a porosity of 29% to manufacture a positive electrode. Here, the porosity(P) is a value calculated by the following equation, and the "measured density of the positive electrode active material layer" is a value calculated by measuring the weight and volume of the positive electrode active material layer separated from a positive electrode current collector of a rolled positive electrode, the "true density of the positive electrode active material" is the density relative to the volume of the positive electrode active material particles themselves, excluding pores, and can be measured using a Pycnometer (AccuPycII 1340). Porosity (P)= {1-(measured density of positive electrode active material layer/true density of positive electrode active material )} × 100.

### Example 2: Manufacture of positive electrode

A positive electrode was manufactured in the same manner as in Example 1, except that a porosity of a positive electrode active material layer was 32% when a dried positive electrode slurry was rolled.

### Example 3: Manufacture of positive electrode

A positive electrode was manufactured in the same manner as in Example 1, except that the second fluorine-based binder was changed to polyvinylidene fluoride (PVDF) having a weight-average molecular weight (Mw) of 880,000 when a positive electrode slurry was prepared.

### Example 4: Manufacture of positive electrode

A positive electrode was manufactured in the same manner as in Example 1, except that the first fluorine-based binder was changed to polyvinylidene fluoride (PVDF) that has a weight-average molecular weight (Mw) of 700,000 and is a homopolymer when a positive electrode slurry was prepared.

### Comparative Example 1: Manufacture of positive electrode

### (1) Preparation of positive electrode slurry

LiFePO₄, which is a primary particle of a monolithic structure having an average particle diameter D₅₀ of 1.0 µm, as a lithium transition metal phosphate, carbon nanotubes (CNTs) as a conductive material, and polyvinylidene fluoride (PVdF), which has a weight-average molecular weight (Mw) of 630,000 g/mol and is a homopolymer, as a fluorine-based binder were added to an N-methylpyrrolidone (NMP) solvent. Mixing was performed at 2500 rpm for 90 minutes using a homo-disperser to prepare a positive electrode slurry.

In the positive electrode slurry, the lithium transition metal phosphate, the conductive material, and the fluorine-based binder were present in a weight ratio of 96.5:1.0:2.5, and a solid content of the positive electrode slurry was 62 wt%.

### (2) Manufacture of positive electrode

The positive electrode slurry was applied onto a 20 µm-thick aluminum thin film to be 600 mg/25 cm² and then hot air-dried at 130°C for 5 minutes so that the positive electrode slurry had a solid content of 99.0 wt% or more. Thereafter, the dried positive electrode slurry was rolled so that a positive electrode active material layer had a porosity of 29% to manufacture a positive electrode.

### Comparative Example 2: Manufacture of positive electrode

A positive electrode was manufactured in the same manner as in Example 1, except that the porosity of a positive electrode active material layer was 26% when a dried positive electrode slurry was rolled.

### Experimental Example 1: Evaluation of flexibility of positive electrode

Each positive electrode manufactured in Examples 1 to 4 and Comparative Examples 1 and 2 was vacuum-dried at a temperature of 130°C for 2 hours, and flexibility was measured, and the results are shown in Table 1.

Specifically, measuring rods having diameters of 1 Φ, 1.5 Φ, 2 Φ, 2.5 Φ, 3 Φ, 4 Φ, 5 Φ, 6 Φ, and 7 Φ were prepared, and each positive electrode manufactured in Examples 1 to 4 and Comparative Examples 1 and 2 was cut into a width of 10 cm and a length of 30 cm. The cut positive electrode was bent in half and the measuring rod was brought into contact therewith, and then both ends of the positive electrode were lifted at a speed of 10 mm per minute. At this time, both ends of the positive electrode were lifted until a force measured by a UTM reaches 5N. Whether a crack occurred in the electrode was observed for each phi through an optical microscope, and when there was no crack, measurement was performed with a measuring rod having a smaller phi (Φ). A maximum phi (Φ) value of the measuring rod at which a crack was generated is shown in Table 1.

In addition, a ratio value (P/D) of a porosity P of the positive electrode active material layer to a maximum phi value D of the measuring rod at which a crack occurred was calculated, and the results are shown in Table 1.

### Experimental Example 2: Adhesion test of positive electrode

Each positive electrode manufactured in Examples 1 to 4 and Comparative Example 1 and 2 was vacuum-dried at a temperature of 130°C for 2 hours, and then adhesion between the positive electrode active material layer and the positive electrode current collector was measured, and the results are shown in Table 1.

Specifically, each positive electrode manufactured in Examples 1 to 4 and Comparative Examples 1 and 2 was cut into a length of 150 mm and a width of 20 mm, and a positive electrode surface was attached in a lengthwise direction to a slide glass having a length of 75 mm and a width of 25 mm using a double-sided tape. That is, the slide glass was attached to a region corresponding to half of the lengthwise direction of the positive electrode. In addition, rubbing was performed 10 times using a roller so that the double-sided tape was uniformly attached, thereby preparing an evaluation sample.

Next, the slide glass part of the evaluation sample was fixed to the sample stage of a universal testing machine (UTM) (product name: LS5, manufacturer: LLOYD), and the half of the positive electrode to which the slide glass was not attached was connected to a load cell of the UTM. A load applied to the load cell was measured while moving the load cell up to 50 mm with a force at an angle of 90° and a speed of 100 mm/min. In this case, an average value of the load measured in the section of 20 mm to 40 mm during the driving section was obtained. This process was repeated a total of 5 times, and the average value is evaluated as positive electrode adhesion (gf/20 mm) of each sample.

**[Table 1]**

| | Maximum phi value of measuring rod at which crack occurred | P/D | Adhesion (gf/20 mm) |
|---|---|---|---|
| Example 1 | 2 | 14.5 | 27 |
| Example 2 | 1.5 | 16 | 24 |
| Example 3 | 2 | 14.5 | 26 |
| Example 4 | 2 | 14.5 | 27 |
| Comparative Example 1 | 3 | 9.66 | 25 |
| Comparative Example 2 | 4 | 6.5 | 28 |

Referring to Table 1, although the positive electrodes according to Examples 1, 3, and 4 and the positive electrode according to Comparative Example 1 all had the same binder content and porosity value, since the positive electrodes according to Examples satisfy the condition that the P/D value is greater than or equal to 10, the positive electrodes according thereto were evaluated to have superior adhesion as well as flexibility.

The positive electrode according to Comparative Example 2 had the most excellent adhesive strength as the porosity of the positive electrode is less than 26, but it was evaluated as having the worst flexibility.

Meanwhile, the positive electrode according to Example 2 was inferior in adhesive strength as compared to the positive electrode according to Examples 1, 3, and 4 due to a decrease in rolling density, but was evaluated as having the best flexibility.

As described above, it is evaluated that the positive electrode according to the present disclosure can minimize the risk of cracking during the manufacturing process of the battery as a result of the improved flexibility.

## Claims

1. A positive electrode comprising:
a positive electrode active material layer disposed on at least one surface of a positive electrode current collector,
wherein the positive electrode active material layer includes a lithium transition metal phosphate and a fluorine-based binder, and
in a flexibility evaluation, in which the positive electrode is lifted after bringing measuring rods for each phi (Φ) into contact with the positive electrode active material layer, a ratio value (= P/D) of a porosity (P) of the positive electrode active material layer calculated by Equation 1 below to a maximum phi value (D) of the measuring rod at which a crack occurs is greater than or equal to 10. Porosity (P) = {1-(measured density of positive electrode active material layer/true density of positive electrode active material)} × 100.

2. The positive electrode of claim 1, wherein
the P/D value ranges from 12.5 to 36.

3. The positive electrode of claim 1, wherein
the porosity (P) of the positive electrode active material layer, as calculated by Equation 1, is greater than or equal to 27%.

4. The positive electrode of claim 1, wherein
the porosity (P) of the positive electrode active material layer, as calculated by Equation 1, ranges from 28% to 36%.

5. The positive electrode of claim 1, wherein
a ratio value (=B/A) of a weight (B) of the lithium transition metal phosphate to a total weight (A) of the fluorine-based binder ranges from 27 to 98.

6. The positive electrode of claim 1, wherein
a ratio value (=B/A) of a weight (B) of the lithium transition metal phosphate to a total weight (A) of the fluorine-based binder ranges from 30 to 65.

7. The positive electrode of claim 1, wherein
in the flexibility evaluation, in which the positive electrode is lifted after bringing measuring rods for each phi (Φ) into contact with the positive electrode active material layer, the maximum phi (Φ) value of the measuring rod at which a crack occurs is 3 phi (Φ) or less.

8. The positive electrode of claim 1, wherein
the lithium transition metal phosphate is represented by Chemical Formula 1 below
[Chemical Formula 1] Li₁₊ₐM1₁₋ₓM2ₓ(PO_{y-b})D_{b}
wherein in Chemical Formula 1,
M1 is at least one element selected from the group consisting of Fe, Mn, Co, Ni, Cu, Zn, and Mg,
M2 is selected from Groups 2 to 15 and is one or more elements excluding element M1,
D is at least one element selected from the group consisting of F, S, and N, and
a, x, y, and b satisfy -0.5≤a≤0.5, 0≤x≤0.8, 3.95≤y≤4.05, and 0≤b≤1, respectively.

9. The positive electrode of claim 1, wherein
a loading amount of the positive electrode active material layer is in a range of 400 mg/25 cm² to 700 mg/25 cm²,

10. The positive electrode of claim 1, wherein
the positive electrode active material layer further includes a conductive material, and the conductive material is a carbon nanotube.

11. The positive electrode of claim 10, wherein
the conductive material is included in the positive electrode active material layer in an amount of 0.5 wt% to 1.3 wt%.

12. The positive electrode of claim 1, wherein
the positive electrode active material layer further includes hydrogenated nitrile-based butadiene rubber.

13. A lithium secondary battery comprising the positive electrode according to claim 1 and a negative electrode.
